# EUROPÄISCHE PATENTSCHRIFT

(11) **EP 2 256 418 B1**
(45) Veröffentlichungstag und Bekanntmachung des Hinweises auf die Patenterteilung: **13.01.2021**
(21) Anmeldenummer: 10173603.1
(22) Anmeldetag: 30.08.2005
(51) Int. Cl.: F24C 15/20, B01D 46/00

(54) **VERFAHREN ZUM EINSTELLEN DER MITTLEREN LUFTGESCHWINDIGKEIT STROMABWÄRTS DER ABLUFTÖFFNUNG EINER ABLUFTBOX EINER WRASENERFASSUNGSEINRICHTUNG**
METHOD FOR ADJUSTING THE AVERAGE AIR SPEED DOWNWARD OF THE EXHAUST AIR OUTLET OF AN EXHAUST AIRBOX OF A FUMES ASPIRATOR
PROCÉDÉ POUR RÉGLER DE LA VITESSE MOYENNE DE L'AIR EN AVAL DE L'OUVERTURE D'AIR D'ÉCHAPPEMENT D'UN BOÎTIER D'ÉVACUATION D'AIR D'UN ASPIRATEUR DE FUMÉES

(30) Priorität: 31.08.2004 DE 102004042158
(43) Veröffentlichungstag der Anmeldung: 01.12.2010
(62) Teilanmeldung aus: 05783368.3
(73) Patentinhaber: Maier, Max, 71636 Ludwigsburg (DE)
(72) Erfinder: Eberhard, Jürgen, 71726, Benningen (DE)
(74) Vertreter: Schumacher & Willsau

(56) Entgegenhaltungen:
- EP-A2- 1 111 311
- DE-A1- 3 625 975
- GB-A- 888 823
- JP-A- 2002 058 603
- US-A- 3 926 171
- US-A- 5 133 786

## Beschreibung

Die Erfindung betrifft ein Verfahren zum Einstellen der mittleren Luftgeschwindigkeit stromabwärts der Abluftöffnung einer Abluftbox einer Wrasenerfassungseinrichtung.

Ein Beispiel für einen Küchenarbeitsplatz ist eine aus der EP 0 915 299 B1 bekannte Speisenzubereitungseinheit, die mit einer Wrasenerfassungseinrichtung versehen und in eine Zubereitungs- und Verkaufstheke integriert ist und auf die weiter unten näher eingegangen wird.

Nach einem "Merkblatt für Großküchen-Geräte mit integrierter Wrasenerfassungseinrichtung, die nicht mit der Raumlufttechnischen-Anlage gekoppelt sind", Nr. F5-2N056, herausgegeben vom Industrieverband Haus-, Heiz- und Küchentechnik e.V., Juli 2004, sind integrierte Wrasenerfassungseinrichtungen, die über thermischen Großküchengeräten oder über thermischen Geräten im Ausgabebereich angebracht sind, nicht mit der Küchenbe- und Entlüftunsanlage gekoppelt. Eine integrierte Wrasenerfassungseinrichtung ist keine raumlufttechnische Anlage (RLT-Anlage) im Sinne von VDI 2052"Raumlufttechnische Anlagen für Küchen" und kann diese auch nicht ersetzen. Nach dem Merkblatt sind integrierte Wrasenerfassungseinrichtungen über Großküchengeräten und dem dort entstehenden Wrasenstrom positioniert, und Geräte, bei denen solche integrierten Wrasenerfassungseinrichtungen verwendet werden können, sind alle thermischen Großküchengeräte und thermischen Geräte in Ausgabeanlagen. Nach diesem Merkblatt ist bei bodennahen Abluftöffnungen eine horizontale induktionsarme Luftführung vorzusehen. In Verbindung mit VDI 2052 besagt diese Bestimmung, dass die mittlere Luftgeschwindigkeit hinter Abluftöffnungen nicht größer als 0,6 m/s sein sollte, weil nämlich ab diesem Wert bereits von Zugluft gesprochen werden kann, die Staub aufwirbelt, an den thermischen Geräten arbeitende Personen frieren lässt und andere Behaglichkeitseinbußen für diese Personen mit sich bringt.

Die gesundheitstechnischen Anforderungen für die Behaglichkeit von Personen im Aufenthaltsbereich von Räumen bei verschieden schwerer körperlicher Tätigkeit sind in DIN 1946, Teil 2, Januar 1994 definiert. Danach sollen RLT-Anlagen für Aufenthaltsräume von Personen ein behagliches Raumklima und eine gesundheitlich verträgliche Raumluft schaffen. DIN 1946 gibt mit Bild 2 auf Seite 3 Werte von mittleren Luftgeschwindigkeiten als Funktion von Temperatur und Turbulenzgrad der Luft im Behaglichkeitsbereich vor. Danach sollte bei einem Turbulenzgrad bis minimal 5 % und einer Lufttemperatur von 20 bis 27° C die mittlere Luftgeschwindigkeit einen Wert von etwa 0,43 m/s nicht übersteigen. Aus Bild 2 kann für 28° C und bei einem Turbulenzgrad von 5 % der oben bereits genannte Wert der mittleren Luftgeschwindigkeit von 0,6 m/s extrapoliert werden. Nun ist, wie oben dargelegt, eine integrierte Luft- oder Wrasenerfassungseinrichtung zwar keine RLT-Anlage, sie wird jedoch in Verbindung mit solchen RLT-Anlagen eingesetzt und sollte Abluft erzeugen, deren mittlere Luftgeschwindigkeit zumindest den vorgenannten Maximalwert von 0,6 m/s nicht überschreitet, um wie die RLT-Anlage im Behaglichkeitsbereich zu arbeiten. Andernfalls träte der Fall ein, dass im Aufenthaltsbereich von Räumen tätige Personen zwar nicht durch die RLT-Anlage in ihrer Behaglichkeit beeinträchtigt werden, wohl aber durch die Wrasenerfassungseinrichtung. Bei bekannten Wrasenerfassungseinrichtungen brauchte bislang auf eine horizontale induktionsarme Luftführung noch nicht geachtet werden. Es gibt nun aber seit dem Jahre 2004 eine Richtlinie, die eine solche Luftführung zumindest für Wrasenerfassungseinrichtungen vorgibt, wie das eingangs erwähnte Merkblatt zeigt.

Bei der aus der eingangs bereits genannten EP 0 915 299 B1 bekannten Speisenzubereitungseinheit besteht die Absaugöffnung aus Absaugschlitzen, die auf drei Seiten einer Zubereitungseinrichtung, wo der Wrasen entsteht, angeordnetsind. Als Filtereinrichtung ist eine Filtereinheit unterhalb der Zubereitungseinrichtung angeordnet, und zwar derart, dass das gleichfalls unterhalb der Zubereitungseinrichtung angeordnete Sauggebläse die Abluft von der Zubereitungseinrichtung durch entsprechende Führungen absaugt und dann durch die Filtereinheit hindurch saugt, woraufhin die Abluft
durch das Sauggebläse hindurch nach außen gefördert wird. Vorzugsweise besteht die Filtereinheit aus zwei im Wesentlichen identischen Einheiten, die beidseitig des Gebläses angeordnet sind. Jede dieser beiden identischen Einheiten besteht aus mehreren im Wesentlichen vertikal angeordneten Platten mit unterschiedlichen Filtereigenschaften, zum Beispiel aus einem Vlies zum Abfangen von Wasserdampf und Feuchtigkeit gefolgt von einer Platte aus Filtermaterial, welches die Funktion eines Fettfilters hat, und dahinter von noch einer oder mehreren weiteren Filterplatten, die Aktivkohle als Filtermaterial enthalten, um flüchtige und geruchbildende Stoffe aus der Abluft heraus zu filtern. Die Abluftöffnung befindet sich im Boden eines Gehäuses, in welchem die Wrasenerfassungseinrichtung untergebracht ist, und leitet die Abluft abwärts auf den Boden eines Raums, in dem die Speisenzubereitungseinheit aufgestellt ist. Wenn es sich um einen abgeschlossenen Raum handelt, wird die Abluft als Umluft in den Raum zurückgegeben. Das Sauggebläse ist direkt an die Abluftöffnung angeschlossen. Da der Wrasen an der Zubereitungseinrichtung auf drei Seiten abgesaugt und durch zwei Filtereinheiten hindurch gesaugt werden muss, zwischen denen das Sauggebläse angeordnet ist, muss das Sauggebläse notwendigerweise eine hohe Förderleistung haben, was unvermeidlich zur Folge hat, dass der Wert der mittleren Luftgeschwindigkeit an der bodennah angeordneten Abluftöffnung wesentlich größer als der oben genannte Wert von 0,6 m/s sein wird.

Aus der EP 1 194 721 B1, die auf den Anmelder zurückgeht, ist eine Luftabsaugvorrichtung für einen Arbeitsplatz, insbesondere einen, an dem Lebensmittel mit Wärme beaufschlagt werden, bekannt. Diese bekannte Luftabsaugvorrichtung unterscheidet sich von der Wrasenerfassungseinrichtung der Speisenzubereitungseinheit nach der EP 0 915 299 B1 insbesondere dadurch, dass mit Wrasen beladene Luft nur über eine einzelne Absaugöffnung auf einer Seite eines Arbeitsplatzes, nämlich einer Speisenzubereitungseinrichtung abgesaugt wird und dass gegenüber der Absaugöffnung ein Blasluftschlitz angeordnet ist, durch den Luft über den Arbeitsplatz in Richtung zu der Absaugöffnung geblasen wird, um über dem Arbeitsplatz einen Luftschleier zu erzeugen. Das Gebläse, das bei dieser bekannten Luftabsaugvorrichtung nicht hinter sämtlichen Filtern wie bei der Speisenzubereitungseinheit nach der EP 0 915 299 B1 angeordnet ist, sondern zwischen einem als Fettfilter ausgebildeten Vorfilter und dem Geruchsfilter, fördert die Luft in einen zu dem Blasluftschlitz führenden Raum, in welchem notwendigerweise ein hoher Druck aufgebaut werden muss. In einem Bereich dieses Raums, der sich stromabwärts des Geruchsfilters befindet, ist ein Luftablass vorgesehen, über den ein Teil des von dem Gebläse erzeugten Luftstroms als Umluft in den Raum gelangt, und zwar mit einer mittleren Luftgeschwindigkeit, deren Wert ebenfalls wesentlich größer als der oben genannte Wert von 0,6 m/s sein wird.

Aus dem deutschen Gebrauchsmuster Nr. 73 39 571 ist ein Geruchsvernichter für Grillschwaden, Kochschwaden od. dgl., insbesondere für Hähnchengrills, bekannt, der aus einem Auffanggehäuse mit Ansaugkanal, Gebläse und Filtereinsatz besteht. Der Filtereinsatz ist aus einem Vorfilter als Fettfilter und einem Hauptfilter als Geruchsfilter aufgebaut. Zwischen den beiden Filtern ist das Gebläse angeordnet. Vor dem Vorfilter ist in dem Ansaugkanal eine Drosselklappe angeordnet. Mittels der Drosselklappe kann die angesaugte Luft- oder Schwadenmenge eingestellt werden. Darüber hinaus kann die Grill- oder Kochtemperatur mit der Drosselklappe eingestellt werden, da diese mit einer Einstellvorrichtung für die Grilltemperatur synchron geschaltet ist. Mit der Drosselklappe ließe sich zwar, obgleich das in dem deutschen Gebrauchsmuster nicht angesprochen ist, theoretisch die mittlere Luftgeschwindigkeit hinter dem Geruchsfilter steuern, jedoch wird in der Praxis mit zunehmendem Schließen der stromaufwärts der Filter und des Gebläses angeordneten Drosselklappe das von dem Grill abgesaugte Luftvolumen zunehmend verringert und dadurch auch die Schwadenerfassung zunehmend verringert.

Aus der DE 199 61 785 A1 ist eine Dunstabzugsvorrichtung bekannt. Bei dieser bekannten Dunstabzugsvorrichtung ist ein erstes Gebläse in einer Kammer untergebracht, die einen Reinluftauslass hat, welcher durch einen Geruchsfilter abgedeckt ist. Eine Steuerung der mittleren Luftgeschwindigkeit der den Reinluftauslass verlassenden Abluft ist bei dieser bekannten Dunstabzugsvorrichtung weder vorgesehen noch ohne weiteres möglich. Vielmehr wird dort angestrebt, den Wirkungsgrad des Geruchsfilters zu verbessern. Zu diesem Zweck ist eine Wärmetauschauervorrichtung vorgesehen, die dazu dient, den Dunstabzugsluftstrom durch einen Kühlluftstrom zu kühlen. Weiterer Stand der Technik ist der US 3926171 zu entnehmen.

Aufgabe der Erfindung ist es, ein Verfahren zum Einstellen der mittleren Luftgeschwindigkeit von durch ein Gebläse über ein Kanalsystem von einer Absaugöffnung zu einer Abluftöffnung als Umluft in den Raum geführter Abluft stromabwärts der Abluftöffnung einer Abluftbox einer Wrasenerfassungseinrichtung anzugeben, das die Behaglichkeit für Personen im Bereich der Abluftöffnung im Vergleich zu aus dem Stand der Technik bekannten Lösungen erhöht.

Diese Aufgabe wird mit den Merkmalen des Anspruchs 1 gelöst.

Mit einer Wrasenerfassungseinrichtung ist ein Arbeitsplatz, an dem verunreinigte Luft zu erfassen ist, von vorn herein ausgerüstet oder nachträglich ausrüstbar. Dazu ist das Kanalsystem mit der Absaugöffnung von vorn herein in den Arbeitsplatz so integriert, dass sich die Absaugöffnung auf Höhe des Arbeitsplatzes befindet, oder lässt sich das gesamte Kanalsystem nachträglich so mit dem Arbeitsplatz kombinieren, dass die Absaugöffnung auf Höhe des Arbeitsplatzes positioniert wird. In beiden Fällen lässt sich dann der Wert der mittleren Luftgeschwindigkeit stromabwärts der Abluftöffnung auf einfache Weise steuern, insbesondere zum Beispiel auf den eingangs erwähnten niedrigen Wert von höchstens 0,6 m/s einstellen, indem stromabwärts von dem Gebläse eine Abluftbox eingesetzt wird, die Seitenflächen hat, wobei eine der Seitenflächen eine Lufteinströmöffnung aufweist, mit der die stromabwärtige Seite des Gebläses verbunden ist, und wobei die übrigen Seitenflächen wahlweise jeweils als eine durch einen Geruchsfilter mit wählbarem Luftwiderstand abdeckbare oder abgedeckte Abluftöffnung ausgebildet sind. Die Größe der Abluftöffnung lässt sich dabei leicht variieren, indem eine Seitenfläche oder, vorzugsweise, mehrere Seitenflächen der Abluftbox mit Abluftöffnungen versehen werden. Der gewünschte Wert der mittleren Luftgeschwindigkeit der Abluft lässt sich schließlich dadurch einstellen, dass zum Abdecken der oder jeder Abluftöffnung ein Geruchsfilter mit entsprechendem Luftwiderstand gewählt wird, indem beispielsweise ein Geruchsfiltermaterial mit entsprechender Porosität und/oder Schichtdicke eingesetzt wird. Auf diese Weise wird nicht nur der erwünschte niedrige Wert der mittleren Luftgeschwindigkeit stromabwärts der Abluftöffnung erzielt, sondern es wird auch der Filterwirkungsgrad verbessert, da die niedrigere mittlere Luftgeschwindigkeit eine entsprechend lange Verweilzeit der mit Geruchsstoffen beladenen Luft in dem Geruchsfilter bewirkt. Bei der Erfindung wird nämlich nicht wie im Stand der Technik nach dem oben erwähnten deutschen Gebrauchsmuster die zu dem Geruchsfilter gelangende Luftmenge verringert, sondern die gesamte Luftmenge wird auf eine insgesamt wesentlich größere Abluftöffnung aufgeteilt, wodurch sich in Kombination mit dem Geruchsfilter die mittlere Luftgeschwindigkeit der Abluft hinter dem Luftfilter in dem gewünschten Maße verringern lässt.

Grundsätzlich wird angestrebt, den Geruchsfilter und die Abluftöffnung auch deshalb möglichst groß zu machen, weil sich mit deren zunehmender Größe ein Gebläse mit zunehmend geringerer Leistung verwenden lässt. Der im Vergleich zu dem Vorfilter äußerst großflächige Geruchsfilter schafft die Möglichkeit, ein Gebläse geringer Leistung einzusetzen, aber trotzdem große Luftmengen zu bewegen, wofür im Stand der Technik ein teures großes Hochdruck-Sauggebläse notwendig ist.

Überdies verlangt das Herausfiltern von Geruchsstoffen einen Filter, der wesentlich größer ist als ein Filter zum Herausfiltern von feinen und feinsten Partikeln wie ein Fettfilter. Auch diese Bedingung lässt sich leicht erfüllen, weil für die Abluftöffnung und somit für den Geruchsfilter eine Größe gewählt wird, die ein Vielfaches der Größe des Vor- oder Fettfilters ist. Der Gegendruck zwischen dem Gebläse und dem Geruchsfilter ist deshalb um ein Vielfaches geringer als bei dem vorgenannten Stand der Technik. Es lässt sich daher mit einem relativ kleinen Gebläse verunreinigte Luft oder Wrasen von dem Entstehungsort sehr wirksam absaugen. Gegenüber dem Stand der Technik nach der EP 1 194 721 B1 erlaubt das sogar, auf den Blasstrahl gänzlich zu verzichten.

Gegenüber dem Stand der Technik nach der EP 0 915 299 B1 erlaubt das, am Entstehungsort von Wrasen, beispielsweise an einer in Draufsicht rechteckigen Kochstelle, nur auf einer Längsseite derselben Wrasen abzusaugen.

Der Abluftstrom lässt sich auf effiziente Weise so steuern, dass hinter dem Geruchsfilter und somit hinter der Abluftöffnung der Wert der mittleren Luftgeschwindigkeit höchstens 0,6 m/s beträgt und üblicherweise sogar noch darunter liegt. Diese niedrige mittlere Luftgeschwindigkeit der Abluft macht es möglich, die Abluftöffnung mit dem Geruchsfilter statt horizontal und bodennah an beliebiger Stelle und stattdessen oder zusätzlich vertikal anzuordnen, zum Beispiel in allen vertikalen Seitenflächen der Abluftbox und in einer Entfernung von dem Entstehungsort von verunreinigter Luft oder Wrasen, die in weiten Grenzen wählbar ist. Auch der Höchstwert der mittleren Luftgeschwindigkeit von 0,6 m/s ist nur ein Beispiel und kann je nach Umgebungsbedingungen in einem weiten Bereich variieren.

Wie bei dem eingangs genannten Stand der Technik wird bei der Erfindung die Abluft als Umluft in den Raum geführt. Das ist unter dem Gesichtspunkt der Energiebilanz wesentlich effizienter, als die Abluft ins Freie oder in einen anderen Raum zu leiten, weil in diesem Fall Luft ständig nachgeliefert werden müsste.

Bei der Wrasenerfassungseinrichtung muss lediglich die Absaugöffnung etwa auf Höhe des Arbeitsplatzes, an dem verunreinigte Luft oder Wrasen entsteht, positioniert sein. Alle übrigen Teile der Wrasenerfassungseinrichtung, die über das Kanalsystem an die Ansaugöffnung angeschlossen sind, insbesondere die Abluftbox und/oder das zwischen Vor- und Geruchsfilter angeordnete Sauggebläse können weit entfernt von dem Entstehungsort von verunreinigter Luft oder Wrasen an einem frei wählbaren Ort untergebracht werden. Die niedrige mittlere Luftgeschwindigkeit der Abluft stromabwärts des Geruchsfilters, die mit der Wrasenerfassungseinrichtung erzielbar ist, und der frei wählbare Ort für die Unterbringung der Abluftbox und/oder des Gebläses gewährleisten, dass die Behaglichkeit von Personen an einem Arbeitsplatz wie z.B. einer Ausgabeanlage oder in einer Küche nicht beeinträchtigt wird, weder durch Zugluft noch durch aufgewirbelten Staub. Das Vorsehen des bei der Wrasenerfassungseinrichtung eingesetzten großen Geruchsfilters wird durch die heutige Verfügbarkeit von sehr preisgünstigem Geruchsfiltermaterial kostenmäßig begünstigt.

Vorteilhafte Ausgestaltungen der Erfindung bilden die Gegenstände der abhängigen Unteransprüche.

Wenn das Gebläse auf seiner stromabwärtigen Seite direkt mit der Abluftbox verbunden ist, wandert bei der Wahl des besten Aufstellungsortes für die Abluftbox das Gebläse mit dieser mit.

Wenn in einer weiteren Ausgestaltung das Kanalsystem einen das Gebläse mit der Abluftbox verbindenden Zuluftkanal aufweist, braucht bei der Wahl des besten Aufstellungsortes der Abluftbox lediglich die Länge des Zuluftkanals entsprechend gewählt zu werden.

Wenn in einer weiteren Ausgestaltung das Gebläse mit der Abluftbox kombiniert ist, braucht lediglich die mit dem Geruchsfilter versehene Abluftbox an geeigneter Stelle in einem Raum untergebracht und für eine geeignete Länge des Zuluftkanals gesorgt zu werden. Das Gebläse kann dabei in einer an die Abluftbox angebauten oder von der Abluftbox abgeteilten Gebläsekammer untergebracht sein.

Wenn in einer weiteren Ausgestaltung die oder jede Abluftöffnung mit einem Gitter als Widerlager für den Geruchsfilter versehen ist, kann ein entsprechender Geruchsfilter einfach auf dieses Gitter aufgelegt werden. Bei horizontaler Anordnung desselben liegt der Geruchsfilter einfach durch Schwerkraft auf dem Gitter auf. Zusätzlich wird jeder Geruchsfilter durch den durch ihn hindurchgehenden Abluftstrom in seiner Lage gehalten.

Wenn in einer weiteren Ausgestaltung der oder jeder Geruchsfilter aus einerflexiblen Matte besteht, die auf die Abluftöffnung auflegbar oder aufgelegt ist, eignet er sich insbesondere zur Verwendung bei der vorstehend genannten Ausführungsform, die ein Gitter als Widerlager für den Geruchsfilter aufweist.

Wenn in einer weiteren Ausgestaltung der oder jeder Geruchsfilter aus offenzelligem Schaumstoff besteht, der mit Aktivkohle beschichtet ist, dürfte es sich um die zur Zeit denkbar preiswerteste Ausführungsform eines solchen Geruchsfilters handeln, der schätzungsweise nur ein- bis zweimal im Jahr auszuwechseln und zu entsorgen ist und somit vernachlässigbare Kosten verursacht. Bevorzugt wird bei der Erfindung als ein solcher Geruchsfilter der PORET®-Carbon-Filter eingesetzt, der von der Emmerling & Weyl GmbH & Co. Schaumstoff-KG, D-65582 Diez, erhältlich ist. Bei dem PORET®-Carbon-System handelt es sich um einen mit Pulverkohle hochbeladenen Skelettschaum, den es in verschiedenen Schichtdicken gibt und der eine gesteuerte Porosität von 10 - 80 PPI (Pores Per Inch oder 4 - 30 Poren pro Zentimeter) sowie eine wählbare Dichte von 21 - 30 kg/m³ hat. Weitere technische Daten dieses Filtermaterials sind dem EMW-Datenblatt 05/01, PORET Filterschaum, entnehmbar.

Wenn in einer weiteren Ausgestaltung der oder jeder Geruchsfilter aus einer Kassette besteht, die Filtermaterial enthält, so sind vorzugsweise die gegenüberliegenden beiden großen Flächen der Kassette vergittert. Zwischen den Gittern kann ein Bett aus Zeolith in Granulatform oder aus Formkohle oder aus einem plissierten Kohlegewebe nach dem Datenblatt "Aktiv gegen Gase und Gerüche: Viledon CarboPleat und DuoPleat Filter" der Firma Freudenberg Vliesstoffe KG, D-69465 Weilheim, aus 6/98, oder aber auch eine Filterschaummatte der vorgenannten Art angeordnet werden. Da die Kassette vergittert ist, bräuchte die Abluftöffnung nicht mit einem Gitter als Widerlager versehen zu sein.

Wenn in einer weiteren Ausgestaltung die Abluftbox mit einer Klappe versehen ist, die sich zum Einlegen und Herausnehmen des Geruchsfilters öffnen lässt, lässt sich der Geruchsfilter auf einfache Weise auswechseln oder zu Wartungszwecken herausnehmen.

Wenn in einer weiteren Ausgestaltung die Abluftbox quaderförmig ausgebildet ist, kann die Abluftbox an geeigneter Stelle entfernt von dem mit der Absaugöffnung versehenen Teil des Kanalsystems angeordnet werden, in der Küche vorzugsweise in oder neben einem Unterschrank oder auf oder neben einem Hängeschrank und in einer Ausgabeanlage in einer Ausgabetheke oder auf einem Wagen mit thermischen Geräten, an denen Wrasen entsteht.

Wenn in einer weiteren Ausgestaltung die Abluftbox zylinderförmig ist, kann die Abluftbox an passender Stelle in einem Raum aufgestellt werden, wobei wiederum lediglich für eine geeignete Verbindung mit dem die Absaugöffnung aufweisenden Teil des Kanalsystems zu sorgen ist.

Wenn der Zuluftkanal der Wrasenerfassungseinrichtung aus wenigstens einem biegsamen Schlauch besteht, können die Abluftbox und der übrige Teil des Kanalsystems der Lufterfassungseinrichtung an geeigneten Stellen in einem Raum entfernt voneinander untergebracht und trotzdem auf einfache Weise mit der Absaugöffnung verbunden werden.

Wenn der Zuluftkanal und die Abluftbox oberhalb einer Hutze angeordnet sind, so ist das eine Anordnung, die in Fällen geeignet ist, wo keine Unterbaumöglichkeit besteht. Statt bodennah wie im Stand der Technik lässt sich in diesem Fall die Abluftöffnung mit dem Geruchsfilter oberhalb des Wrasenentstehungsortes in einer Küche oder Ausgabeanlage anordnen, ohne dass die Behaglichkeit durch die Abluft beeinträchtigt wird. Die geringe Abluftgeschwindigkeit stromabwärts des Geruchsfilters macht das möglich. Auch in diesem Fall ist die Absaugöffnung neben dem Wrasenentstehungsort positioniert, wie in dem eingangs geschilderten Stand der Technik, also in einer Küche oder Ausgabeanlage auf der Höhe des Wrasenentstehungsortes.

Wenn in einer weiteren Ausgestaltung wenigstens eine der stromaufwärtigen Seite der Absaugöffnung zugewandte Seitenfläche der Abluftbox als eine durch den Geruchsfilter abdeckbare oder abgedeckte Abluftöffnung ausgebildet ist, kann die Abluftbox wie eine herkömmliche Luft- oder Dunstabzugshaube oberhalb eines Arbeitsplatzes angebracht werden, dient aber im Unterschied zu der herkömmlichen Luft- oder Dunstabzugshaube zum Abgeben von Abluft, die das Personal an dem Arbeitsplatz nicht stört und über die Absaugöffnung der Lufterfassungseinrichtung gleich wieder mit eingesaugt werden kann. So kann verunreinigte Luft mehreren Reinigungsvorgängen hintereinander unterzogen werden, bevor sie schließlich als Umluft in den umgebenden Raum gelangt, und es kann ein Sauggebläse mit noch weniger Leistung eingesetzt werden.

Wenn in einer weiteren Ausgestaltung wenigstens eine der Hutze zugewandte Seitenfläche einer an die stromaufwärtige Seite der Abluftbox angeschlossenen Haube mit einer durch einen Geruchsfilter abgedeckten Abluftöffnung versehen ist, lässt sich eine vor Ort bereits vorhandene Dunstabzugshaube zu einer Abluftbox umrüsten, die an die Abluftbox der Wrasenerfassungseinrichtung angeschlossen wird oder statt derselben eingesetzt werden kann.

Ausführungsbeispiele einer Wrasenerfassungseinrichtung werden im Folgenden unter Bezugnahme auf die beigefügten Zeichnungen näher beschrieben. Es zeigt
- Fig. 1: in Rückansicht eine fahrbare Ausgabeanlage mit einer Speisenzubereitungseinrichtung und mit einer ersten Ausführungsform einer Wrasenerfassungseinrichtung,
- Fig. 2: die Ausgabeanlage nach Fig. 1 in Seitenansicht,
- Fig. 3: die Ausgabeanlage nach Fig. 1 in Vorderansicht,
- Fig. 4: die Ausgabeanlage nach Fig. 1 in Draufsicht,
- Fig. 5: als eine Einzelheit in ausführlicherer Darstellung einen Teil der Ausgabeanlage nach Fig. 2,
- Fig. 6: eine abgewandelte Ausführungsform einer bei der als Wrasenerfassungseinrichtung ausgebildeten Lufterfassungseinrichtung einsetzbaren Abluftbox in Seitenansicht,
- Fig. 7: die Abluftbox nach Fig. 6 in Draufsicht,
- Fig. 8: die Abluftbox nach Fig. 6 in Vorderansicht,
- Fig. 9: in Seitenansicht und teilweise im Schnitt eine stationäre Ausgabeanlage mit einer Speisenzubereitungseinrichtung und mit einer zweiten Ausführungsform der Wrasenerfassungseinrichtung,
- Fig. 10: in Seitenansicht und teilweise im Schnitt eine stationäre Ausgabeanlage mit einer Speisenzubereitungseinrichtung mit einer dritten Ausführungsform der Wrasenerfassungseinrichtung,
- Fig. 11: in perspektivischer Darstellung eine vierte Ausführungsform der Wrasenerfassungseinrichtung, die zum Einsatz in einer Küche oder einer Ausgabeanlage geeignet ist,
- Fig. 12: als eine Einzelheit einer fünften Ausführungsform der Wrasenerfassungseinrichtung eine zylinderförmige Abluftbox in Seitenansicht,
- Fig. 13: die Abluftbox nach Fig. 12 in einer Teillängsschnittansicht,
- Fig. 14: in Seitenansicht und teilweise im Schnitt eine fahrbare Ausgabeanlage mit einer Speisenzubereitungseinrichtung und mit einer sechsten Ausführungsform der Wrasenerfassungseinrichtung,
- Fig. 15: in Vorderansicht eine Küchenzeile mit einer Speisenzubereitungseinrichtung und einer siebten Ausführungsform der Wrasenerfassungseinrichtung,
- Fig. 16: in Seitenansicht die Küchenzeile nach Fig. 15,
- Fig. 17: in Seitenansicht einen Arbeitstisch mit einer achten Ausführungsform der Wrasenerfassungseinrichtung und
- Fig. 18: die Wrasenerfassungseinrichtung nach Fig. 17 in Vorderansicht.

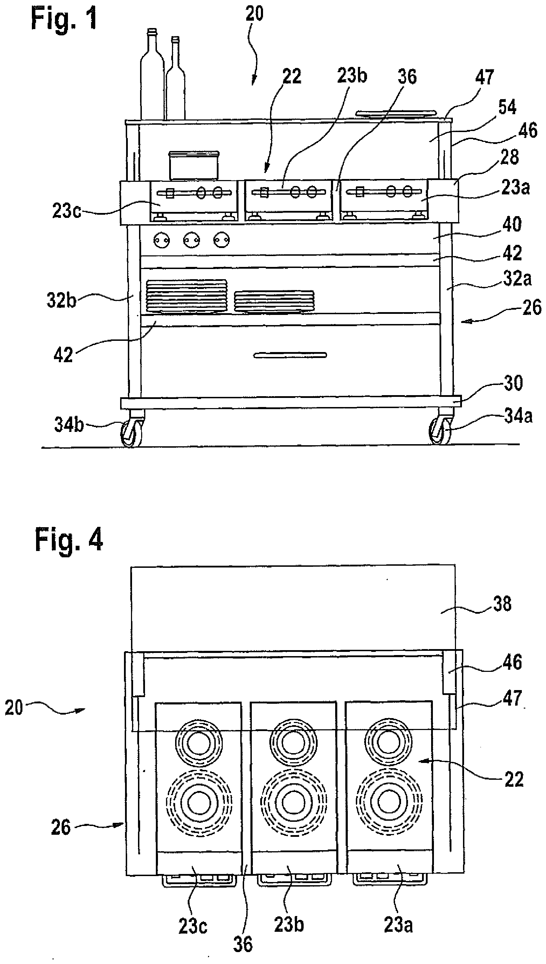

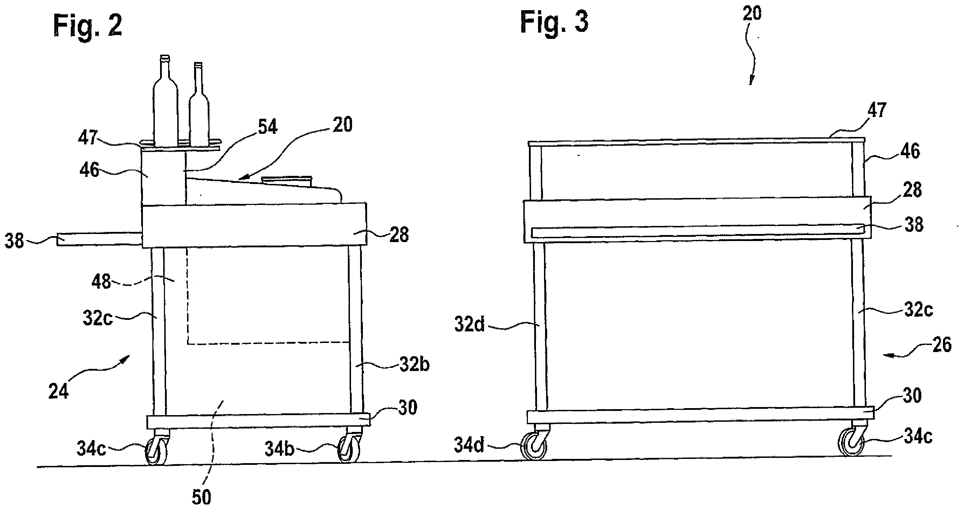

Die Fig. 1 - 4 zeigen eine insgesamt mit 20 bezeichnete fahrbare Ausgabeanlage mit einer insgesamt mit 22 bezeichneten Speisenzubereitungseinrichtung und mit einer ersten Ausführungsform einer insgesamt mit 24 bezeichneten Wrasenerfassungseinrichtung in Rückansicht, Seitenansicht, Vorderansicht bzw. Draufsicht. Die fahrbare Ausgabeanlage 20 ist auf einem Wagen 26 untergebracht, der einen oberen Rahmen 28 und einen unteren Rahmen 30 aufweist, die durch vier vertikale Pfosten 32a- 32d miteinander verbunden und durch vier Lenkrollen 34a - 34d auf dem Boden abgestützt sind. In dem oberen Rahmen 28 ist eine Nische 36 gebildet, die auf der Rückseite des Wagens 26, welche in Fig. 1 gezeigt ist, offen ist. Die Speisenzubereitungseinrichtung 22 ist in der Nische 36 angeordnet und besteht aus drei nebeneinander angeordneten thermischen Geräten 23a - 23c zum Warmhalten und/oder Zubereiten von Speisen. Gemäß der Darstellung in den Fig. 2 - 4 hat die Ausgabeanlage 20 auf ihrer Vorder- oder Kundenseite eine Tablettrutsche 38, die an dem oberen Rahmen 28 befestigt ist. Der untere Rahmen 30 ist in dem gezeigten Ausführungsbeispiel ein aus Vierkantrohr geschweißter rechteckiger Rahmen. Unterhalb der offenen Seite der Nische 36 erstreckt sich eine zwischen den Pfosten 32a und 32b befestigte Steckdosenleiste 40 mit drei in Fig. 1 angedeuteten Steckdosen für den elektrischen Anschluss der drei thermischen Geräte 23a, 23b und 23c. Ein Zwischenboden 42 dientzum Abstellen von Geschirr od. dgl.

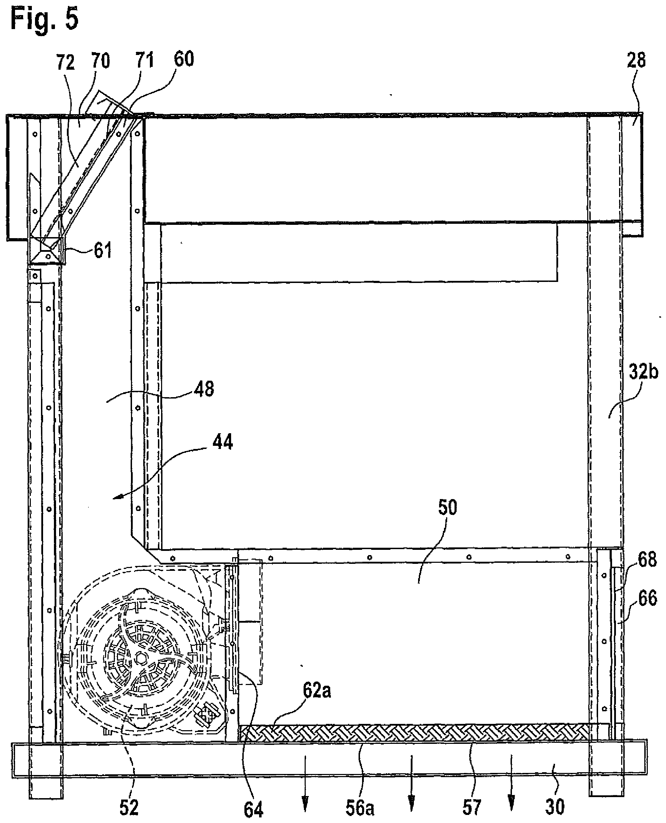

Die Wrasenerfassungseinrichtung 24 umfasst ein Kanalsystem 44, bestehend aus einer Hutze 46, einem Zuluftkanal 48 und einer Abluftbox 50, die gegenseitig in Luftströmungsverbindung stehen. In dem Kanalsystem ist ein Gebläse 52 angeordnet, und zwar zum Beispiel so, wie es in Fig. 5 gezeigt ist, auf die nun zusätzlich Bezug genommen wird.

Fig. 5 zeigt als eine Einzelheit in ausführlicherer Darstellung einen Teil der Ausgabeanlage 20 nach Fig. 2. Die Hutze 46, der Zwischenboden 42 und die Lenkrollen 34a-34d sind in Fig. 5 zur Vereinfachung der Darstellung des Kanalsystems 44 weggelassen worden. Das Kanalsystem 44 führt von einer in der Hutze 46 vorgesehenen Absaugöffnung 54 oder von einer die Absaugöffnung bildenden Lufteintrittsöffnung 70 zu wenigstens einer in der Abluftbox 50 vorgesehenen Abluftöffnung 56a. Die Absaugöffnung 54 bzw. die Lufteintrittsöffnung 70 ist auf der Höhe der thermischen Geräte 23a - 23c positioniert, also dort, wo bei dem Warmhalten oder Erhitzen von Speisen od. dgl. Wrasen entsteht. Bei der Wrasenerfassungseinrichtung 24 nach den Fig. 1 bis 5 ist das Gebläse 52 in dem Zuluftkanal 48 an dem stromabwärtigen Ende desselben angeordnet. Das Gebläse 52 ist auf seiner stromabwärtigen Seite direkt mit der Abluftbox 50 verbunden. Das Gebläse 52 ist bei dieser Ausführungsform und bei den weiter unten beschriebenen weiteren Ausführungsformen der Wrasenerfassungseinrichtung 24 bevorzugt ein doppelseitig saugendes AC Radialgebläse der Firma ebm-papst Mulfingen GmbH & Co. KG, D-74673 Mulfingen, beispielshalber des Typs D2E 146-HT760-01. Weitere Einzelheiten zu diesem Gebläse finden sich auf den Seiten 84 und 85 des Katalogs "ebmpapst Radialgebläse und -ventilatoren, Axialventilatoren" aus dem Jahre 2004. Das Gebläse 52 hat die Aufgabe, mit Wrasen beladene Luft an dem Entstehungsort über der Speisenzubereitungseinrichtung 22 abzusaugen und zu der Abluftöffnung 56a zu fördern, damit die Luft auf ihrem Weg durch eine Filtereinrichtung gereinigt wird.

Die Filtereinrichtung ist in dem Kanalsystem 44 angeordnet und weist wenigstens einen Fettfilter 60 als einen Vorfilter und wenigstens einen Geruchsfilter 62a als einen Hauptfilter auf. In Fig. 5 ist das Kanalsystem 44 ab dem Gebläse 52 als die bereits erwähnte Abluftbox 50 ausgebildet, die in diesem Ausführungsbeispiel quaderförmig ist, also sechs Seitenflächen hat. Jede Seitenfläche kann als eine Abluftöffnung ausgebildet sein, wobei sich jede Abluftöffnung möglichst groß so wählen lässt, wie es der Festigkeitsverband der quaderförmigen Abluftbox 50 zulässt. In Fig. 5 ist diejenige Seitenfläche der Abluftbox 50, an die das Gebläse 52 angeschlossen ist, lediglich mit einer Lufteinströmöffnung 64, also mit keiner Abluftöffnung versehen. In einer Klappe 66, die eine von der Rückseite der Ausgabeanlage 20 her zugängliche Zugangsöffnung 68 der Abluftbox 50 verschließt, ist eine Abluftöffnung 56d ausgebildet.

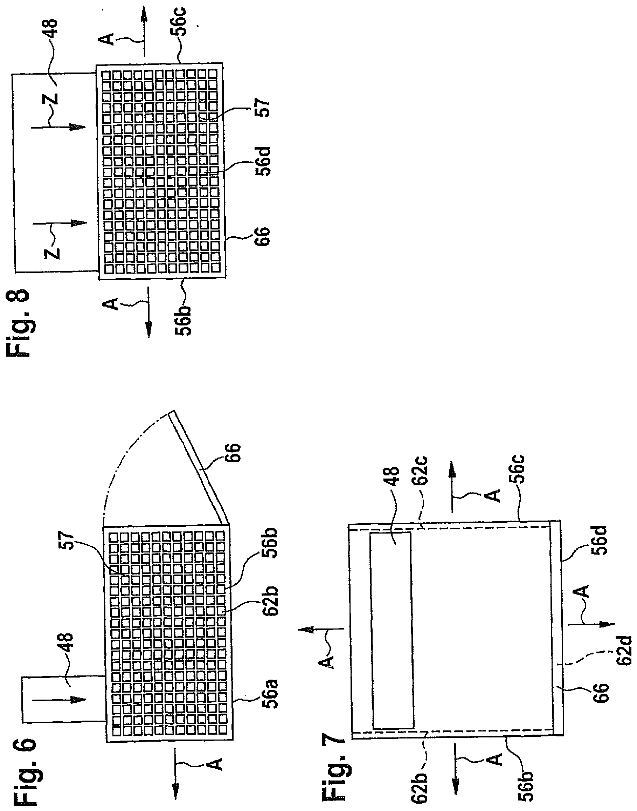

In den Fig. 6 bis 8, auf die im Folgenden noch näher Bezug genommen wird, ist die bei einer abgewandelten Ausführungsform einer bei der Wrasenerfassungseinrichtung 24 einsetzbare Abluftbox 50 in Seitenansicht, Draufsicht bzw. Vorderansicht gezeigt. Diese Figuren zeigen auch, dass die beiden vertikalen Seitenwände der Abluftbox 50 als Abluftöffnungen 56b, 56c ausgebildet sind. Jede der Abluftöffnungen 56a- 56d ist durch einen Geruchsfilter 62a - 62d abgedeckt. Die gesamte Größe der Abluftöffnungen 56a - 56d und der Geruchsfilter 62a - 62d wird in Kombination mit dem Luftwiderstand der Geruchsfilter, der durch deren Porosität und/oder Dicke bestimmt wird, so gewählt, dass sich bei einem vorgegebenen Volumenstrom der Abluft A, welcher durch das Gebläse 52 erzeugt wird, stromabwärts der Abluftöffnungen und der Geruchsfiter ein Wert der mittleren Luftgeschwindigkeit ergibt, durch den die Behaglichkeit in dem die Ausgabeanlage 20 umgebenden Raum und der Filterwirkungsgrad nicht beeinträchtigt werden, wie es eingangs erläutert worden ist.

Als Geruchsfilter 62a - 62d werden vorzugsweise flexible, mit Aktivkohlepulver beschichtete Schaumstoffmatten eingesetzt, die auf die Abluftöffnungen 56a - 56d aufgelegt werden. Für diesen Fall ist jede Abluftöffnung mit einem Gitter 57 als Widerlager für den Geruchsfilter versehen. Stattdessen kann jeder Geruchsfilter aus einer Kassette bestehen, welche das Filtermaterial enthält und auf ihrer Vorder- und Rückseite jeweils mit einem Gitter 57 versehen ist. In diesem Fall hat jede Kassette den gleichen Aufbau wie die Klappe 66 nach den Fig. 6 und 8.

Bei der Wrasenerfassungseinrichtung nach den Fig. 1 - 4 ist das Kanalsystem 44 im Bereich der Absaugöffnung 54 als die Hutze 46 ausgebildet. Die Hutze 46 ist ein gesondert ausgebildetes Modul, das über der Lufteintrittsöffnung 70 des Zuluftkanals 48 auf den oberen Rahmen 28 so aufgesetzt wird, wie es in den Fig. 1 - 4 dargestellt ist. Die Oberseite der Hutze 46 ist bei dem dargestellten Ausführungsbeispiel als eine Abstellplatte 47 ausgebildet. Der Fettfilter 60 ist in dem Kanalsystem 44 unmittelbar neben der Absaugöffnung 54 in dem stromaufwärtigen Ende des Zuluftkanals 48 unmittelbar benachbart zu der Lufteintrittsöffnung 70 angeordnet. Unterhalb des Fettfilters 60 ist eine Fettauffangschale 61 angeordnet. Dem Fettfilter 60 sind in dem hier beschriebenen Ausführungsbeispiel entweder ein Filter aus Vliesstoff oder Metallgestrick oder, wie es in Fig. 5 angedeutet ist, ein Agglomerator 71 und ein weiterer Fettfilter 72 nachgeschaltet. Wenn dem Fettfilter 60 wie hier der Agglomerator 71 und der weitere Fettfilter 72 nachgeschaltet sind, lässt sich Feuchtigkeit praktisch 100 %-ig aus der mit Wrasen beladenen Luft abscheiden, bevor diese stromabwärts der Fettfilter 60, 72 in das Kanalsystem 44 gelangt. Ein als Fettfilter 60 eingesetzter Zyklon-Filter ist beispielsweise in der Lage, Partikel abzuscheiden, die eine Größe von 5 µm oder mehr haben. Feinste Wassertröpfchen können eine Größe unter 5 µm haben. Diese werden durch den Agglomerator 71, ein Metallgestrick, in größere Tröpfchen verwandelt und dann durch den weiteren Fettfilter 72 ausgeschieden.

Bei dem in den Fig. 6 - 8 dargestellten Ausführungsbeispiel der Abluftbox 50 mündet der Zuluftkanal 48 direkt in der oberen Seitenfläche der Abluftbox. Bei diesem Ausführungsbeispiel ist das nicht dargestellte Gebläse in dem nicht sichtbaren, weiter stromaufwärtigen Teil des Kanalsystems 44 angeordnet, zum Beispiel in der hier ebenfalls nicht dargestellten Hutze 46.

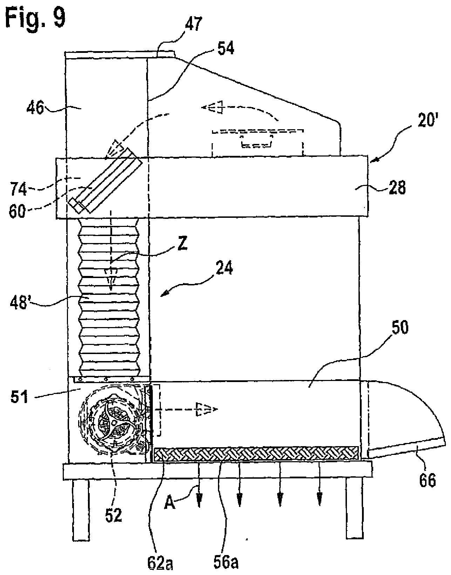

Fig. 9 zeigt in Seitenansicht und teilweise im Schnitt eine stationäre Ausgabeanlage 20' mit einer Speisenzubereitungseinrichtung 22 und mit einer zweiten Ausführungsform der Wrasenerfassungseinrichtung 24. Wie bei der ersten Ausführungsform ist das Gebläse 52 auf seiner stromabwärtigen Seite direkt mit der Abluftbox 50 verbunden, die hier den gleichen Aufbau haben kann wie bei der ersten Ausführungsform, also wie in der Darstellung in Fig. 5. Unterschiedlich gegenüber der ersten Ausführungsform ist, dass ein Zuluftkanal 48' vorgesehen ist, der aus einem biegsamen Schlauch besteht und an eine das Gebläse 52 enthaltende Gebläsekammer 51 angeschlossen ist, und dass der Fettfilter 60 in einer Ausnehmung 74 in dem oberen Rahmen 28 unmittelbar unterhalb der Hutze 46 angeordnet ist.

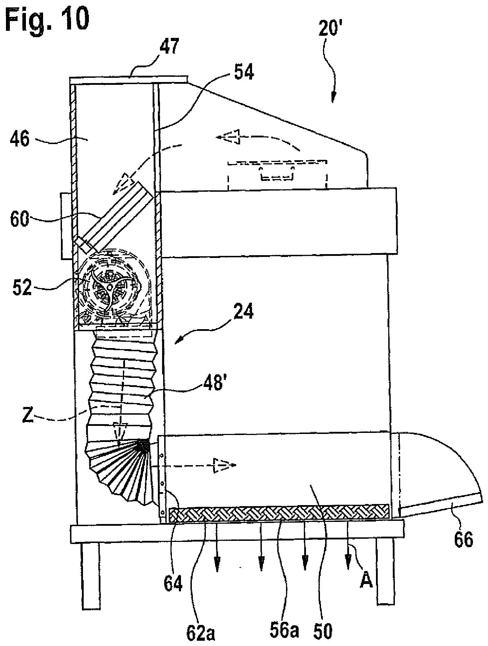

Fig. 10 zeigt in Seitenansicht und teilweise im Schnitt eine stationäre Ausgabeanlage 20' mit einer Speisenzubereitungseinrichtung 22 mit einer dritten Ausführungsform der Wrasenerfassungseinrichtung 24, die sich von der zweiten Ausführungsform nach Fig. 9 dadurch unterscheidet, dass der Fettfilter 60 und unmittelbar stromabwärts desselben das Gebläse 52 in der Hutze 46 angeordnet sind, und zwar in einem Bereich derselben, welcher sich unterhalb der Absaugöffnung 54 befindet. Die Hutze 46 ist durch einen Abluftkanal 48', der aus einem biegsamen Schlauch besteht, mit der Lufteinströmöffnung 64 der Abluftbox 50 verbunden.

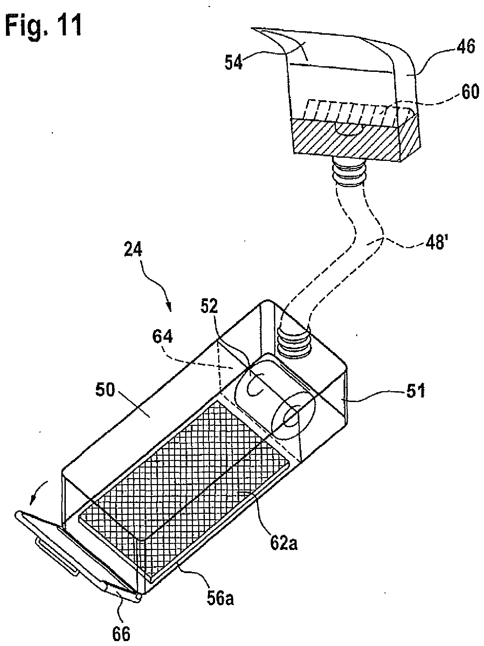

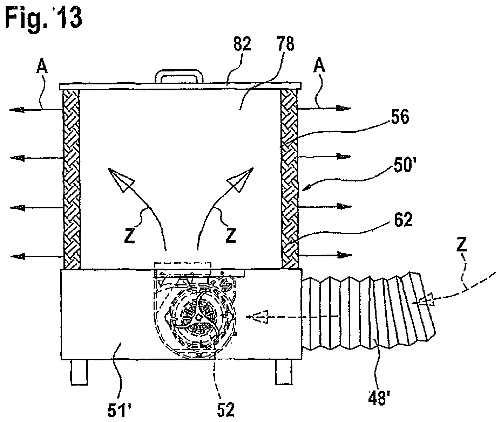

Fig. 11 ist eine perspektivische schematische Darstellung einer vierten Ausführungsform der Wrasenerfassungseinrichtung 24, die zum Einsatz in einer Küche oder einer Ausgabeanlage geeignet ist. Der Fettfilter 60 ist in die Hutze 46 integriert. Das Gebläse 52, das mit der Abluftbox 50 kombiniert ist, ist in einer an die Abluftbox 50 angebauten oder von der Abluftbox 50 abgeteilten Gebläsekammer 51 untergebracht. Die Hutze 46 und die Gebläsekammer 51 sind durch einen Zuluftkanal 48' verbunden, der als ein biegsamer Schlauch ausgebildet ist. Es ist zwar lediglich eine Seitenfläche der Abluftbox 50, nämlich die Boden- oder untere Fläche versehen mit einer Abluftöffnung 56a und einem Geruchsfilter 62a dargestellt, es können jedoch auch die vertikalen Seitenflächen der Abluftbox und die Klappe 66 jeweils mit einer Abluftöffnung und einem Geruchsfilter ausgestattet sein, ausgenommen die Seitenfläche, die die Lufteinströmöffnung 64 aufweist. In der sehr vereinfachten Darstellung in Fig. 11 ist der Luftaustrittskanal auf der stromabwärtigen Seite des Gebläses 52, der an die Lufteinströmöffnung 64 angeschlossen ist, nicht gezeigt. Der Luftaustrittskanal auf der stromabwärtigen Seite des Gebläses 52 ist in den Fig. 9 und 13 gestrichelt angedeutet. Die beiden axialen Stirnseiten des Gebläses 52 bilden dessen Lufteintrittsöffnungen.

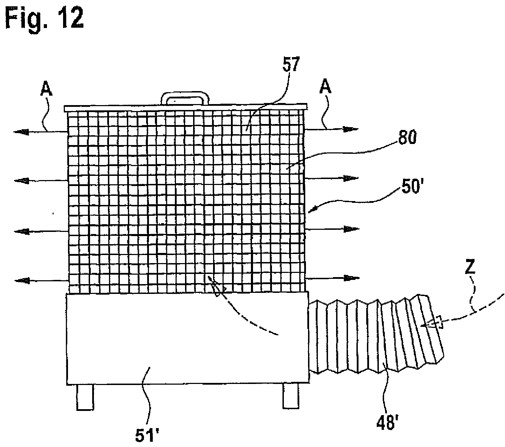

Die Fig. 12 und 13 zeigen als eine Einzelheit einer fünften Ausführungsform der Wrasenerfassungseinrichtung 24 eine zylinderförmige Abluftbox 50' derselben in Seitenansicht bzw. in einer Teillängsschnittansicht. In einer unteren Kammer oder Gebläsekammer 51' der Abluftbox 50' ist das Gebläse 52 angeordnet. Die Abluftbox 50' ist über das Gebläse 52 in der Gebläsekammer 51' und einen Zuluftkanal 48', der als ein biegsamer Schlauch ausgebildet und an die Gebläsekammer 51' angeschlossen ist, mit dem übrigen, in den Fig. 12 und 13 nicht gezeigten Kanalsystem verbunden. Eine obere Kammer 78 ist auf ihrer gesamten Mantelfläche als eine vergitterte Abluftöffnung 80 ausgebildet, die auf der Innenseite des Gitters 57 mit einem Geruchsfilter 62 abgedeckt ist. Die obere Kammer 78 ist durch einen abnehmbaren Deckel oder eine Klappe 82 verschlossen, der bzw. die in der Schließstellung verriegelbar ist.

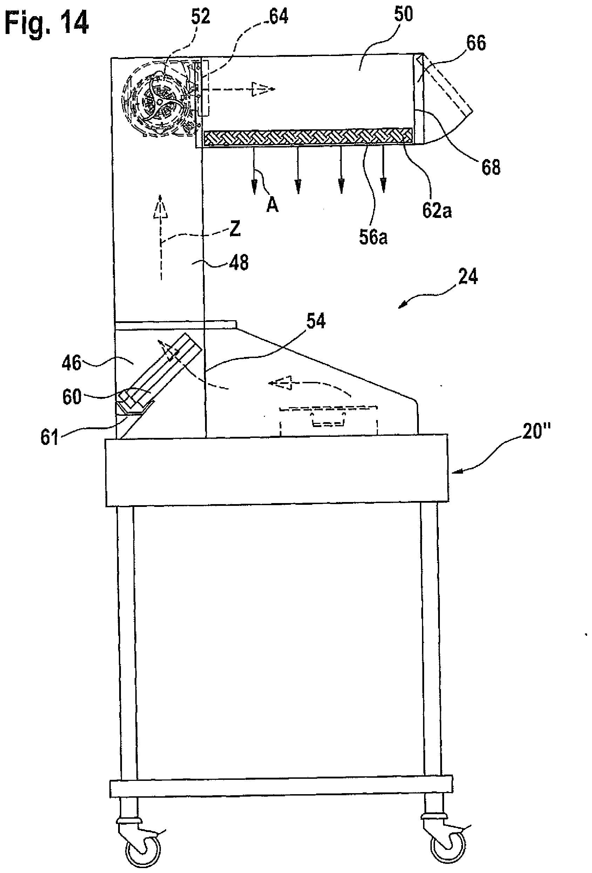

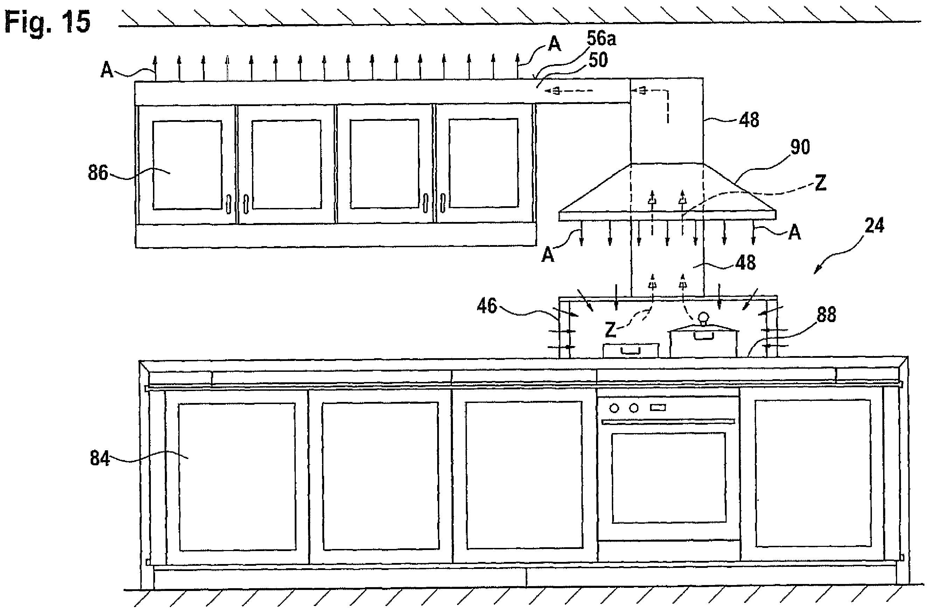

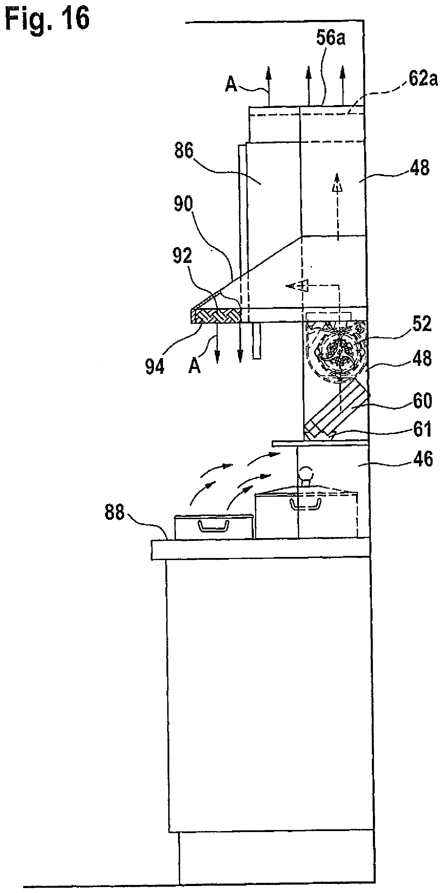

Fig. 14 zeigt in Seitenansicht und teilweise im Schnitt eine insgesamt mit 20" bezeichnete fahrbare Ausgabeanlage mit einer (in Fig. 14 nicht sichtbaren) Speisenzubereitungseinrichtung und mit einer sechsten Ausführungsform der Wrasenerfassungseinrichtung 24. Ein Zuluftkanal 48, der hier aus zwei um die Wagenlänge beabstandeten, zu der oberhalb der Hutze 46 angeordneten Abluftbox 50 führenden Zweigen bestehen kann, enthält das direkt an die Abluftbox 50 angeschlossene Gebläse 52. Die Abluftbox 50 und das Gebläse 52 haben im Übrigen den gleichen Aufbau wie bei der in Fig. 9 dargestellten zweiten Ausführungsform der Wrasenerfassungseinrichtung 24. Bei der Ausführungsform nach Fig. 14 sind der Fettfilter 60 und die Fettauffangschale 61 in der Hutze 46 angeordnet. In der Darstellung in Fig. 14 ist die nach unten gewandte, also der stromaufwärtigen Seite der Absaugöffnung 54 zugewandte Seitenfläche der Abluftbox 50 als eine durch den Geruchsfilter 62a abgedeckte Abluftöffnung 56a dargestellt. Wie bei der Abluftbox 50 nach den Fig. 5 - 8 können aber auch die vertikalen Seitenflächen und die obere Seitenfläche der quaderförmigen Abluftbox 50 nach Fig. 14 jeweils als Abluftöffnung ausgebildet sein, die durch einen Geruchsfilter abgedeckt ist. Ebenso kann die Klappe 66 wie in Fig. 8 mit einem Geruchsfilter versehen sein. Wie bei der ersten Ausführungsform der Wrasenerfassungseinrichtung 24 wird die Größe der Abluftöffnungen so gewählt, dass sich in Kombination mit den eingesetzten Geruchsfiltern der gewünschte niedrige Höchstwert der mittleren Luftgeschwindigkeit der Abluft A ergibt. Im Betrieb saugt das Gebläse 52 mit Wrasen beladene Luft am Wrasenentstehungsort über die Absaugöffnung 54 in die Hutze 46 an, die mit dem über ihr angeordneten Zuluftkanal 48 in Strömungsverbindung steht. In dem Fettfilter 60 wird die abgesaugte Luft von Partikeln wie Fett- und Wassertröpfchen befreit und strömt als Zuluft Z zu dem Gebläse 52, von wo aus die Zuluft in die Abluftbox 50 gefördert und als Abluft A über den oder die Geruchsfilter abgegeben wird. Die den Geruchsfilter 56a in Richtung der Speisenzubereitungseinrichtung verlassende Abluft A wird direkt wieder in die Hutze 46 eingesaugt, um als Zuluft Z das Kanalsystem erneut zu durchströmen und so erneut gereinigt zu werden. Diese Ausführungsform eignet sich nicht nur zum Einsatz auf einem Wagen, wie es in Fig. 14 angedeutet ist, sondern auch als Aufsatz auf einem Küchengerät, das bei der Speisenzubereitung eingesetzt wird. Die Abluftbox 50 nimmt in diesem Fall die Stelle ein, an der sich sonst üblicherweise eine Dunstabzugshaube befindet, liefert aber im Gegensatz zu dieser die Abluft A, die den Vorgang der Wrasenabsaugung von dem Wrasenentstehungsort in Höhe der Speisenzubereitungseinrichtung unterstützt. Eine solche Wrasenerfassungseinrichtung kann aber auch in Kombination mit einer vorhandenen Dunstabzugshaube eingesetzt werden, wobei letztere zu einer Ablufthaube um- funktioniert wird. Einen solchen Fall zeigen die im Folgenden erläuterten Fig. 15 und 16.

Die Fig. 15 und 16 zeigen in Vorderansicht bzw. Seitenansicht eine Küchenzeile mit einer Speisenzubereitungseinrichtung und einer siebenten Ausführungsform der Wrasenerfassungseinrichtung 24. Die Küchenzeile besteht aus einer Reihe von Unterschränken 84 und aus einer Reihe von Hängeschränken 86. An einem Ende der Zeile der Unterschränke 84 befindet sich als Speisenzubereitungseinrichtung ein Kochfeld 88, bei dessen Einsatz Wrasen entsteht. Die Hutze 46 ist wie dargestellt um das Kochfeld 88 aufgesetzt und durch den Zuluftkanal 48, in welchem der Fettfilter 60 und das Gebläse 52 gemäß der Darstellung in Fig. 16 angeordnet sind, an eine Haube 90 angeschlossen. Der Zuluftkanal 48 ist nach oben über die Haube 90 hinaus verlängert und an eine langgestreckte Abluftbox 50 angeschlossen, die über ihre nach oben gerichtete und durch einen Geruchsfilter 62a abgedeckte Abluftöffnung 56a die Abluft A nach oben abgibt. Die der Hutze 46 zugewandte untere Seitenfläche der an die stromaufwärtige Seite der Abluftbox 50 angeschlossenen Haube 90 ist mit einer durch einen Geruchsfilter 94 abgedeckten Abluftöffnung 92 versehen, über die die Abluft A nach unten in Richtung zu dem Kochfeld 88 abgegeben wird. Wie bei der in Fig. 14 dargestellten sechsten Ausführungsform der Wrasenerfassungseinrichtung 24 wird so der Wrasenabsaugvorgang vorteilhaft unterstützt, ohne dass die Behaglichkeit in dem umgebenden Raum oder der Filterwirkungsgrad beeinträchtigt wird. Diese Ausführungsform ermöglicht nicht nur auf einfache Weise das Auswählen von großflächigen Abluftöffnungen und in Kombination mit entsprechenden Geruchsfiltern das Erzielen der erwünschten niedrigen mittleren Luftgeschwindigkeit der Abluft A, sondern sogar eine Verbesserung des Wirkungsgrades der Wrasenerfassungseinrichtung und der Filtereinheit.

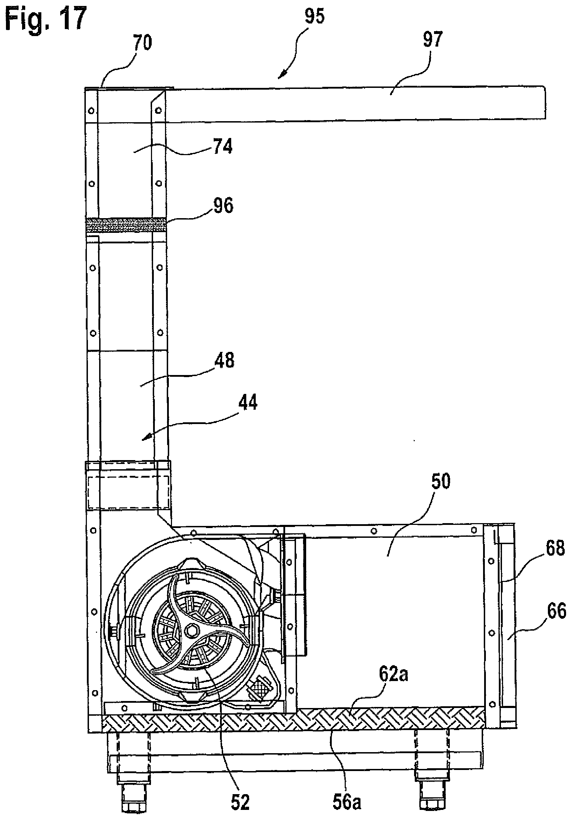

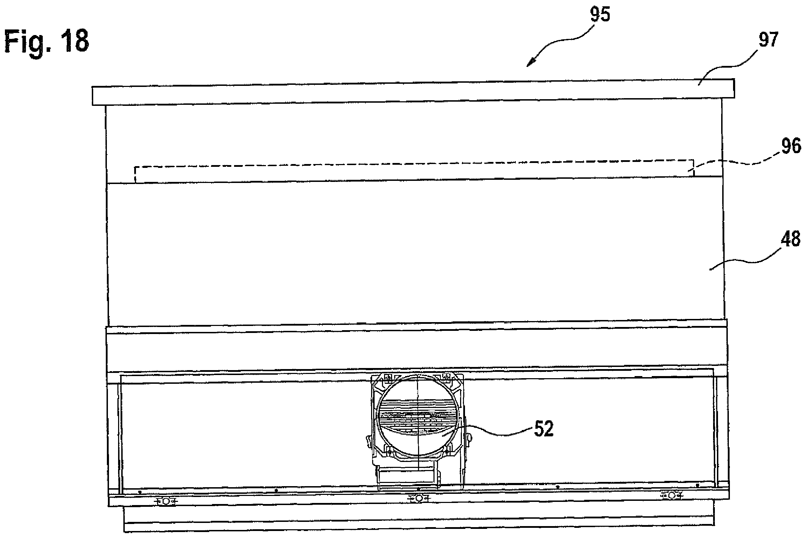

Fig. 17 zeigt in Seitenansicht einen insgesamt mit 95 bezeichneten Arbeitstisch mit einer achten Ausführungsform der Wrasenerfassungseinrichtung. Fig. 18 zeigt die Wrasenerfassungseinrichtung nach Fig. 17 in Vorderansicht. Fig. 17 zeigt die Wrasenerfassungseinrichtung in gleicher Darstellung wie die Wrasenerfassungseinrichtung 24 in Fig. 5. In Fig. 17 sind gleiche Teile wie in Fig. 5 mit gleichen Bezugszahlen versehen und werden hier nicht nochmals beschrieben.

Der Arbeitstisch 95 hat oben eine Tischplatte 97, über deren rückwärtige Längsseite sich die Ausnehmung 74 mit der Lufteintrittsöffnung 70 erstreckt. In der Ausnehmung 74 ist statt der Fettfilter 60, 72 wie bei der Ausführungsform nach Fig. 5 ein Grobpartikelfilter 96 angeordnet, bei dem es sich vorzugsweise um einen Filter aus Vliesstoff handelt. Der Arbeitstisch 95 ist für Zwecke einsetzbar, die in der Beschreibungseinleitung genannt sind, also beispielsweise zur Luftreinhaltung und insbesondere Geruchsbeseitigung an einem Arbeitsplatz in einer Werkstatt, einem Laboratorium oder einem anatomischen oder gerichtsmedizinischen Institut.

An dieser Stelle sei abschließend noch erwähnt, dass es die beträchtliche Größe der quaderförmigen Abluftbox 50 ermöglicht, beispielshalber nur deren Boden mit einer Abluftöffnung 56a zu versehen und diese mit einem Geruchsfilter 62a abzudecken, um eine ausreichende Verringerung der mittleren Luftgeschwindigkeit der aus der Abluftbox austretenden Abluft zu erzielen. Die beiden vertikalen Seitenflächen und die horizontale obere Seitenfläche der Abluftbox 50 können demgemäß auf der Innenseite mit Schalldämmmaterial beklebt werden, so dass die Behaglichkeit in der Umgebung einer Ausgabeanlage 20 oder eines Arbeitstisches 95 auch nicht durch störendes Geräusch des Gebläses 52 oder des Abluftstroms beeinträchtigt wird.

## Patentansprüche

1. Verfahren zum Einstellen der mittleren Luftgeschwindigkeit von durch ein Gebläse (52) über ein Kanalsystem (44) von einer Absaugöffnung zu einer Abluftöffnung (56; 56a - 56d; 80; 92) als Umluft in den Raum geführter Abluft stromabwärts der Abluftöffnung einer Abluftbox (50, 50') einer Wrasenerfassungseinrichtung auf höchstens 0,6 m/s, mit den folgenden Schritten:
- Vorsehen einer Seitenflächen aufweisenden Abluftbox stromabwärts von dem Gebläse (52), wobei eine der Seitenflächen eine Lufteinströmöffnung (54) aufweist, mit der die stromabwärtige Seite des Gebläses (52) verbunden ist;
- Wahlweises Ausbilden der übrigen Seitenflächen als eine durch einen Geruchsfilter (62; 62a - 62d; 94) mit wählbarem Luftwiderstand abdeckbare Abluftöffnung, wobei sich die Größe der Abluftöffnung variieren lässt, indem eine oder mehrere Seitenflächen der Abluftbox mit Abluftöffnungen (56; 56a - 56d; 80; 92) versehen werden; und schließlich
- Einstellen des gewünschten Wertes der einzustellenden mittleren Luftgeschwindigkeit der Abluft, durch Abdecken der Abluftöffnung mit dem Geruchsfilter (62; 62a - 62d; 94) mit entsprechendem Luftwiderstand.

2. Verfahren nach Anspruch 1, bei dem das Gebläse ein Sauggebläse (52) ist, das der Lufteinströmöffnung (54) die Luft zuführt.

3. Verfahren nach Anspruch 1 oder 2, bei dem die Abluftöffnung mit einem Gitter (57) als Geruchsfilterwiderlager versehen ist.

4. Verfahren nach einem der Ansprüche 1 bis 3, bei dem der Geruchsfilter (62; 62a - 62d; 94) aus einer flexiblen Matte besteht.

5. Verfahren nach Anspruch 4, bei dem der Geruchsfilter (62; 62a - 62d; 94) aus offenzelligem Schaumstoff besteht, der mit Aktivkohle beschichtet ist.

6. Verfahren nach einem der Ansprüche 1 bis 5, bei dem der Geruchsfilter (62; 62a - 62d; 94) aus einer Kassette besteht, die Filtermaterial enthält.

7. Verfahren nach einem der Ansprüche 1 bis 6, bei dem die Abluftbox eine Klappe (66, 82) aufweist, die sich zum Einlegen und Herausnehmen des Geruchsfilters (62; 62a - 62d; 94) öffnen lässt.

8. Verfahren nach einem der Ansprüche 1 bis 7, bei dem die Abluftbox (50) quaderförmig ist.

9. Verfahren nach einem der Ansprüche 1 bis 8, bei dem die Abluftbox (50') zylinderförmig ist.

## Claims

1. A method for adjusting the average air speed of exhaust air guided from a suction opening to an exhaust air outlet (56; 56a - 56d; 80; 92) via a duct system (44) and into the room as circulating air by a fan (52) to a maximum of 0.6 m/s downwards of the exhaust air outlet of an exhaust air box (50, 50') of a fumes aspirator, the method comprising the following steps:
- providing an exhaust air box having side surfaces downstream of the fan (52), wherein one of the side surfaces has an air inflow opening (54) to which the downstream side of the fan (52) is connected;
- optionally forming the remaining side surfaces as an exhaust air outlet coverable by an odour filter (62; 62a - 62d; 94) having a selectable air resistance, wherein the size of the exhaust air outlet can be varied by providing one or more side surfaces of the exhaust air box with exhaust air outlets (56; 56a - 56d; 80; 92); and finally
- adjusting the desired value of the average air speed of the exhaust air to be adjusted by covering the exhaust air outlet with the odour filter (62; 62a - 62d; 94) having the appropriate air resistance.

2. The method according to claim 1, wherein the fan is a suction fan (52) supplying the air to the air inflow opening (54).

3. The method according to claim 1 or 2, wherein the exhaust air outlet is provided with a lattice (57) as an odour filter abutment.

4. The method according to one of the claims 1 to 3, wherein the odour filter (62; 62a -62d; 94) is made of a flexible mat.

5. The method according to claim 4, wherein the odour filter (62; 62a - 62d; 94) is made of an open-celled foamed material coated with activated carbon.

6. The method according to one of the claims 1 to 5, wherein the odour filter (62; 62a - 62d; 94) consists in a cartridge containing the filter material.

7. The method according to one of the claims 1 to 6, wherein the exhaust air box is provided with a flap (66, 82) which can be opened for inserting and removing the odour filter (62; 62a - 62d; 94).

8. The method according to one of the claims 1 to 7, wherein the exhaust air box (50) is cuboidal.

9. The method according to one of the claims 1 to 8, wherein the exhaust air box (50') is cylindrical.

## Revendications

1. Procédé pour régler la vitesse moyenne de l'air d'air d'échappement en aval de l'ouverture d'air d'échappement d'un boîtier d'évacuation d'air (50, 50') d'un aspirateur de fumées acheminé dans l'espace comme de l'air ambiant par une soufflante (52) à travers un système de canalisation (44) d'une ouverture d'aspiration à une ouverture d'air d'échappement (56 ; 56a - 56d ; 80 ; 92) à 0,6 m/s maximum avec les étapes suivantes :
- prévoir un boîtier d'évacuation d'air présentant des surfaces latérales en aval de la soufflante (52), une des surfaces latérales présentant une ouverture d'entrée d'air (54) avec laquelle le côté en aval de la soufflante (52) est raccordé ;
- former sélectivement les surfaces latérales restantes comme une ouverture d'air d'échappement pouvant être recouverte d'un filtre à odeurs (62 ; 62a - 62d ; 94) à la résistance d'air réglable, la taille de l'ouverture d'air d'échappement pouvant varier si une ou plusieurs surfaces latérales du boîtier d'évacuation d'air sont prévues avec des ouvertures d'air d'échappement (56 ; 56a - 56d ; 80 ; 92) ; puis
- régler la valeur souhaitée de la vitesse moyenne de l'air à régler d'air d'échappement en recouvrant l'ouverture d'air d'échappement d'un filtre à odeurs (62 ; 62a - 62d ; 94) avec la résistance d'air correspondante.

2. Procédé selon la revendication 1, dans lequel la soufflante est une soufflante aspirante (52) qui achemine l'air vers l'ouverture d'entrée d'air (54).

3. Procédé selon la revendication 1 ou 2, dans lequel l'ouverture d'air d'échappement est prévue avec une grille (57) comme aboutement pour le filtre à odeurs.

4. Procédé selon l'une des revendications 1 à 3, dans lequel le filtre à odeurs (62 ; 62a - 62d ; 94) est constitué d'une natte flexible.

5. Procédé selon la revendication 4, dans lequel le filtre à odeurs (62 ; 62a - 62d ; 94) est constitué de mousse à alvéoles ouverts qui est recouverte de charbon actif.

6. Procédé selon l'une des revendications 1 à 5, dans lequel le filtre à odeurs (62 ; 62a - 62d ; 94) est constitué d'une cassette qui comprend du matériel filtrant.

7. Procédé selon l'une des revendications 1 à 6, dans lequel le boîtier d'évacuation d'air présente un clapet (66, 82) qui s'ouvre pour poser ou retirer le filtre à odeurs (62 ; 62a - 62d ; 94).

8. Procédé selon l'une des revendications 1 à 7, dans lequel le boîtier d'évacuation d'air (50) est parallélépipèdique.

9. Procédé selon l'une des revendications 1 à 8, dans lequel le boîtier d'évacuation d'air (50') est cylindrique.
